# EUROPEAN PATENT APPLICATION

(11) **EP 4 119 431 A1**
(43) Date of publication of application: **18.01.2023**
(21) Application number: 22184780.9
(22) Date of filing: 13.07.2022
(51) Int. Cl.: B62M 9/10, B62M 9/121

(54) **PULLEY FOR A REAR DERAILLEUR OF A BICYCLE**

(30) Priority: 14.07.2021 DE 102021118247
(71) Applicant: Golec, Marcin, London SW19 2RR (GB)
(72) Inventor: Golec, Marcin, London SW19 2RR (GB)
(74) Representative: Farago-Schauer, Peter Andreas

(57) **Abstract**

The present invention relates to a toothed pulley (1) for a bicycle rear derailleur. The pulley (1) carries on each of its side faces a cushioning ring (4) made of an elastically deformable material and adapted to come in contact with link plates of a roller chain (3) running over the pulley (1). The pulley (1) includes a number of spaced supports (5) formed laterally to the pulley (1) and projecting in the axial direction of the pulley (1) for supporting each cushioning ring (4), wherein the number of spaced supports (5) is equal to the number of teeth (2) of the pulley (1), wherein each support (5) is angularly aligned with a respective tooth (2) of the pulley (1), and wherein the cushioning ring (4) extends, in an unloaded state, free-floating in a straight line between every two adjacent supports (5).

## Description

The present invention relates to a toothed pulley for a rear derailleur of a bicycle carrying on each of its side faces a cushioning ring made of an elastically deformable material and adapted to come in contact with link plates of a roller chain running over the pulley.

A toothed pulley with a ring made of an elastically deformable material is disclosed in US 975 938 A in the form of a sprocket, wherein the cushioning rings serve as cushions between the teeth of the sprocket and the link plates of a roller chain engaged with the sprocket. As disclosed therein, the cushioning rings may have an annular or rectangular cross section.

Further toothed pulleys with respective cushioning rings made of an elastically deformable material are disclosed in US 10 253 865 B2 in the form of sprockets of a multi-gear cassette for a rear wheel of a bicycle, wherein the cushioning rings dampen the forces produced by the chain members running from the slack span of the chain onto a sprocket. These cushioning rings have rectangular cross sections.

However, the prior art pulleys are relatively noisy and buckling in operation. In addition, the above discussed prior art pulleys are not suited to provide for a low-noise and smooth operation in a pulley for a bicycle rear derailleur.

Accordingly, it is an object of the present invention to provide a pulley for a bicycle rear derailleur with silencing characteristics which is very low-noise in operation and runs very smoothly.

The above object and further objects which will become apparent hereinafter are achieved by a pulley having the features of claim 1.

The present invention also provides for a rear derailleur of a bicycle according to claim 12 including the pulley of the invention.

Further advantageous features are set out in the dependent claims.

According to the invention, the pulley is for a bicycle rear derailleur. Such a derailleur usually comprises, as is known in the art, a guide pulley and a tension pulley both being rotatably mounted on a derailleur cage which is movable with respect to the bicycle and adapted to guide and tension a bicycle roller chain in an S-shape feeding to the cassette. The cage can be positioned under the desired sprocket of a multi-gear cassette attached to the hub of a rear wheel of a bicycle by an arm that can swing back and forth under the sprockets. Gear shifting is carried out by moving the arm which transfers the chain from one sprocket to another while pedaling.

Further, according to the invention, the pulley includes a number of spaced supports formed laterally to the pulley and projecting in the axial direction of the pulley for supporting each cushioning ring, wherein the number of spaced supports is equal to the number of teeth of the pulley, wherein each support is angularly aligned with one tooth of the pulley, and wherein the cushioning ring extends, in an unloaded state of the cushioning ring, free-floating in a straight line between every two adjacent supports.

That is, the supports are spaced angularly in equal angles. The cushioning ring will be adapted to be hold by the supports with a certain tension by which it is accommodated in the support. By this tension the link plates can be slowed down very smoothly by small forces when the chain members run onto the pulley.

In a rear derailleur of a bicycle the inventive spaced supports are particularly advantageous because the forces produced by the chain members running from the slack span of the chain onto the tension pulley and then onto the guide pulley are relatively low and need only relatively week dampening forces which can be provided by the free-floating portions of the cushioning ring.

By such a relatively week dampening, it is possible to make the rear derailleur super silent which is a massive advantage over rear conventional derailleurs. This effect is achieved practically without losses that inevitably accompany any damping. Thus, the rear derailleur becomes extremely silent and smooth running.

While the free-floating cushioning ring according to the invention is particularly advantageous for the guide pulley of a bicycle rear derailleur, also the tension pulley of a bicycle rear derailleur may advantageously carry such free-floating cushioning ring in addition to the guide pulley or independently of the guide pulley.

Because the supports are angularly aligned with the teeth of the pulley, the free-floating portions of the cushioning ring extend between each pair of adjacent teeth. Such an angular arrangement of the free-floating portions of the cushioning ring relative to the teeth is suitable to accommodate the connection areas of inner and outer link plates that are wider at their interconnected ends than in the middle, as it is the case for common bicycle chains.

Furthermore, the free-floating portions of the cushioning ring relative to the teeth dampen the impact of the chain rollers on the portion of the pulley between two adjacent teeth. Such portions are commonly known in the art as depressions or valleys which are formed between consecutive teeth of a pulley as seen in the axial direction of the pulley. Advantageously, the free-floating portions of the cushioning ring relative to the teeth prevent, at least at the initial contact of the chain with the pulley, the contact of the chain rollers with the depressions or valleys between consecutive teeth, such that the cushioning ring is contacted only by the link plates of the chain.

Each cushioning ring may be supported axially between one side face of the pulley and radial extensions formed at each support. According to the invention, the side face of the pulley includes the section of the pulley adjacent to the depressions or valleys between consecutive teeth as seen in the axial direction of the pulley and this section is sometimes designated in the art as the root section of the teeth. Each cushioning ring may project radially from the radial extensions, preferably by at least 1/4 of the total radial height of the cushioning ring and more preferably by at least 2/5 of the total radial height of the cushioning ring.

Every two adjacent supports may be continuously connected by a concavely curved transition piece formed laterally to the pulley and all supports and all concavely curved transition pieces on one side of the pulley form a continuous or contiguous undulating track extending radially beneath the corresponding cushioning ring. The concavely curved transition pieces of each undulating track form fixed end stops which may limit any downward movements of the free-floating portions of each cushioning ring in the direction of the axis of the pulley to the amount by which the free-floating portions shall yield in the direction of the axis when the connection areas of inner and outer link plates of a chain run onto the pulley.

The supports and/or the concavely curved transition pieces may be advantageously made in one piece with the pulley although the supports and/or the concavely curved transition pieces may be manufactured separately and fixedly joined to the pulley.

The pulley has a plurality of teeth. In case of rear derailleurs, we speak of teethed pulleys instead of sprockets because the teeth of such pulleys which transfer no longitudinal forces must not be so pronounced as the teeth of a sprocket which usually transfer longitudinal forces.

While the cushioning rings may have well known cross sections, for example square, rectangular or circular, in a preferred embodiment of the invention each cushioning ring comprises, at least on its side facing the roller chain, a groove extending along its entire perimeter length, which groove, as seen in a cross-sectional view through the cushioning ring, is a recess flanked by two protrusions, wherein the protrusions are adapted and orientated to come in contact with outer and inner link plates, respectively, of a roller chain running over the pulley. This contributes to make the derailleur very silent and smooth running, because by the two protrusions, which may be much narrower than the total width of the outer and inner link plates, relatively weak dampening forces can be provided.

In said preferred embodiment, in a cross-sectional view through the cushioning ring the protrusions on each cushioning ring may be curved convexly and may be connected contiguously by the recess which is curved concavely, as seen from inside the cushioning ring.

In preferred embodiments, the cross section of each cushioning ring is generally x-shaped. In particular, the cross-sectional profile of each cushioning ring may have the shape of an alphabetic character x whose legs are short with respect body of the character and have concave sections between the legs. Preferably, the ends of the legs are concavely rounded. The legs may also be short with respect to their length and have concavely rounded ends.

In a cross-sectional view through the cushioning ring, the concavely rounded ends of the legs may be four circumferentially distributed and convexly curved protrusions of the respective cushioning ring which are connected contiguously by four circumferentially distributed and concavely curved recess. Some profiles of this type can be mathematically described as elongated hypotrochoids with reversal points and four peaks, which are continuous and continuously differentiable, but the cross-sectional profile of the cushioning ring is not limited to such special shapes or to continuous and/or continuously differentiable shapes.

The x-shaped cushioning rings according to the preferred embodiment should be mounted to the pulley in a manner and orientation in which two convexly curved protrusions of the respective cushioning ring partially face the outer and inner link plates, respectively, of a roller chain running over the pulley and are able to come in contact therewith.

The invention is suited for a special form of a bicycle rear derailleur wherein the pulleys are rotatably mounted to the cage by mounting means and an interposed radial bearing, wherein the mounting means are arranged so as to be spaced from the center of rotation of the pulleys and are positioned along a circular mounting opening provided in the cage spaced away from the center of rotation of the pulleys, so as to leave a free space in the center of the pulleys in its mounted state, as described in EP 20177531.9. The relevant teaching of EP 20177531.9 is herewith incorporated by reference.

The invention is also suited for common bicycle rear derailleurs, wherein, for instance, the pulleys van be rotatably mounted between two lateral plates of the cage on central bearings which are fitted on central bolts which connect two lateral plates of the cage to each other.

The elastically deformable material may be natural or synthetic rubber, polymer or elastomer or mixtures of the foregoing materials.

The above and other features of the invention will become apparent from the following description of preferred embodiments, given by way of non-limiting example with reference to the accompanying drawings, wherein:
- Figure 1: is a perspective view of a first embodiment of a pulley of a rear derailleur for a bicycle;
- Figure 2: is the same perspective view as in Figure 1 further showing a part of a roller chain running over the pulley;
- Figure 3: is a plan side view of the arrangement of Figure 2 as seen from a position lying distantly from the pulley on its axis;
- Figure 4: is a sectional view through an angular sector of the tension pulley as seen from the same position as in Figure 3;
- Figure 5: is a sectional view of the pulley of Figure 1 along the line 5-5 in Figure 3;
- Figure 6: is a sectional view of the arrangement of Figure 2 along the line 6-6 in Figure 3;
- Figure 7: is an enlarged sectional view of a radial outer part of the pulley along the line 7-7 in Figure 4, i.e., through one of the teeth of the pulley;
- Figure 8: is an enlarged sectional view of a radial outer part of the pulley along the line 8-8 in Figure 4, i.e., through the gap between two consecutive teeth of the pulley;
- Figure 9: is a perspective view of the angular sector of the tension pulley as shown in Figure 4, wherein one of the cushioning rings is partially cut away; and
- Figure 10: is a schematic view of the rear part of a bicycle having a derailleur which is equipped with a tension pulley and a guide pulley as shown in the foregoing Figures.

Conventionally, pulleys of a rear derailleur may be rotatably mounted between two lateral plates of a cage on central bearings which are fitted on central bolts which connect two lateral plates of the cage to each other.

Pulleys as shown and described herein may also be mounted by mounting means (and not by central bolts) and an interposed radial bearing, wherein the mounting means are arranged so as to be spaced from the center of rotation of the pulley. The mounting means are positioned along a circular mounting opening provided in the cage spaced away from the center of rotation of the pulley. Such a bearing, which may be a ball bearing, a roller bearing or a slide bearing, may have a much larger radius than conventional bearings of the pulleys of a rear derailleur. The cage can be a single-plate or a two-plate cage. Such a bearing can be arranged so as to leave a free space in the center of the guide pulley in its mounted state, which provides for a free space which works against the accumulation of dirt because rotating pulley structural arms have been eliminated, and the chain guide is easy to clean. In addition, the free space, if provided at least in the center of the tension pulley, provides for a totally new and impressive look of the derailleur. With respect to this, reference is made to the pertinent teachings of a former patent application of the applicant of the present invention having the title "Improved chain guide for a rear derailleur of a bicycle" filed on May 29, 2020 with the EP as EP 20177531.9, the content of which is herewith incorporated by reference.

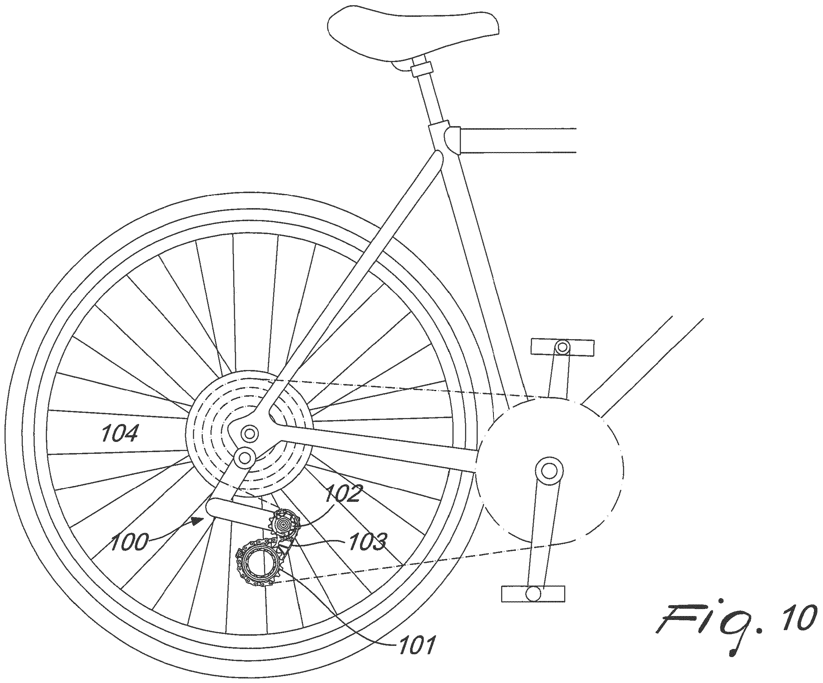

Figure 10 is a schematic view of the rear part of a bicycle having a rear derailleur 100 which comprises a tension pulley 101 and a guide pulley 102 mounted at a cage 103. The pulleys 101 and 102 may optionally each have a free space in their center. The rest of the derailleur 100 is shown only schematically. The cassette is shown also schematically at reference number 104.

Pulleys as shown and described herein may be rotatably mounted between two lateral plates of a cage on central bearings which are fitted on central bolts which connect the two lateral plates of the cage to each other, or rotatably mounted on central bearings which are fitted on a single-plated cage.

Pulleys as shown and described herein may also be rotatably mounted between two lateral plates of a cage by mounting means (and not by central bolts) and an interposed radial bearing, wherein the mounting means are arranged so as to be spaced from the center of rotation of the pulley, as it is the case in EP 20177531.9. Also, in this case the cage may be a single-plated cage, as described in EP 20177531.9.

### EMBODIMENT

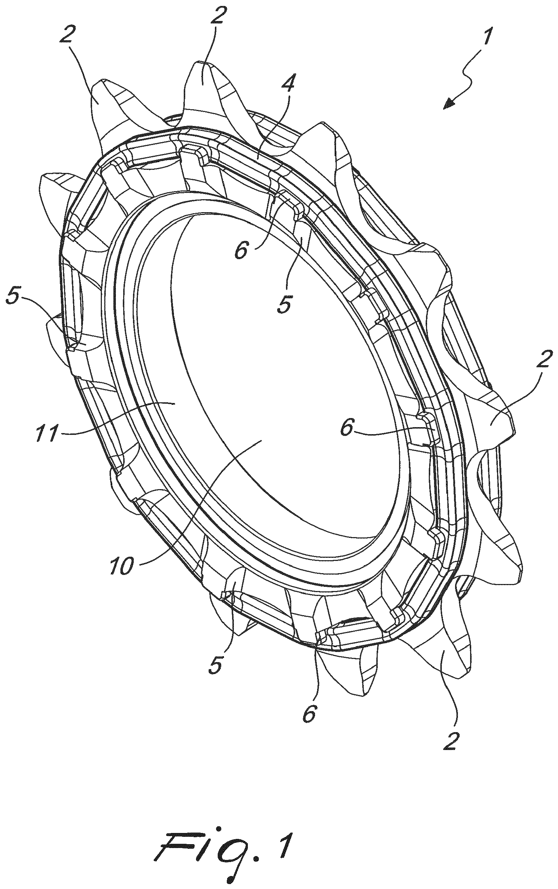

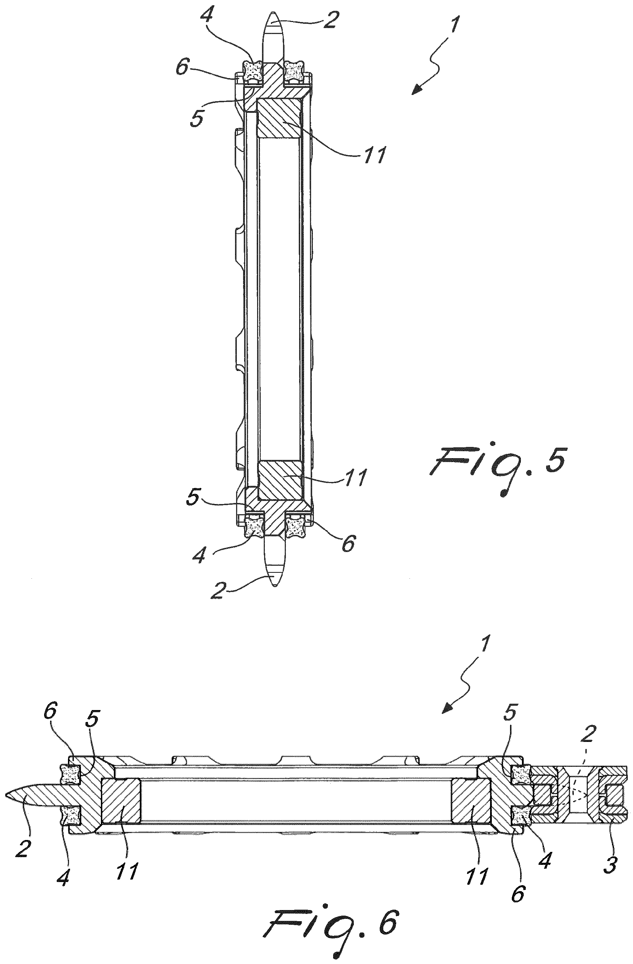

With reference to Figures 1 to 9, an embodiment of a pulley of a rear derailleur of a bicycle is described.

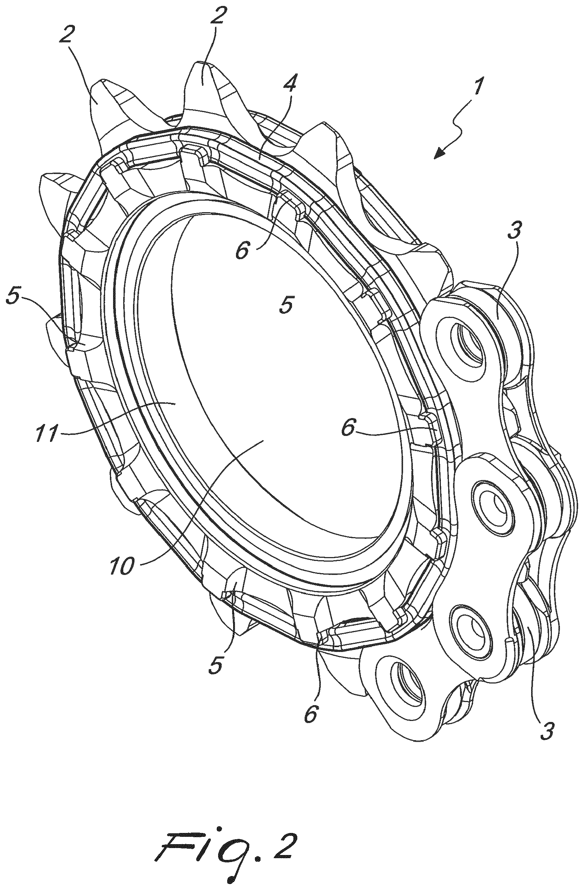

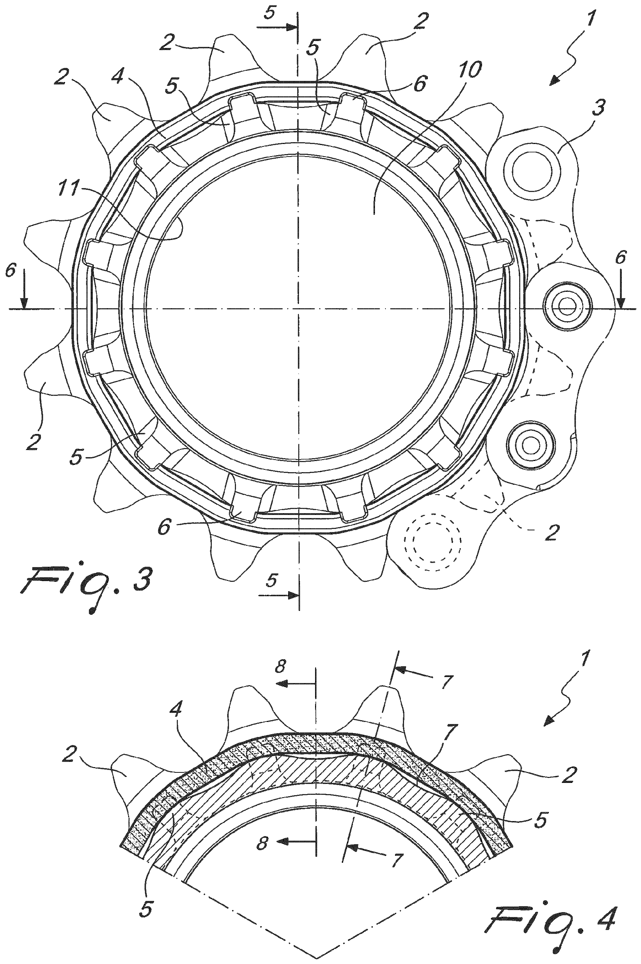

As shown therein, a pulley 1, which is shown as a guide pulley but may also be embodied as a tension pulley, has a plurality of teeth 2 adapted to come in contact with link members of a roller chain 3 running over the pulley 1 (as partially shown in Figures 2 and 3).

The pulley 1 carries on each of its axial side faces a cushioning ring 4 preferably made of an elastically deformable material like natural or synthetic rubber, polymer or elastomer or mixtures thereof.

As is best seen in Figure 4, each cushioning ring 4 is supported radially by a number of spaced supports 5 formed adjacent to each side face of the pulley 1 and projecting outwards in the axial direction of the pulley 1, wherein the number of supports 5 is equal to the number of teeth 2. Each support 5 is angularly aligned with one respective tooth 2 of the pulley 1.

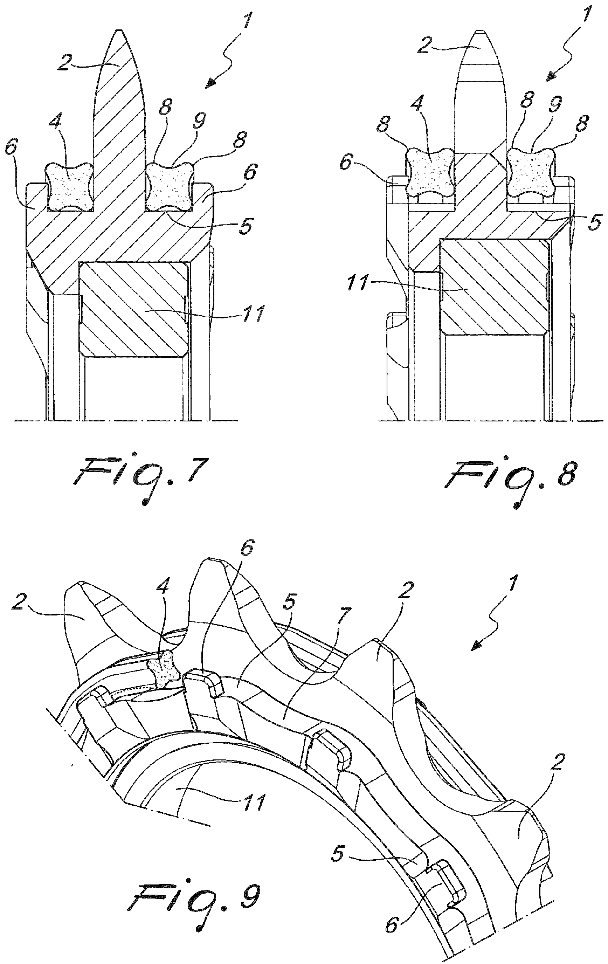

Each support 5 extends initially axially away from the pulley 1 and ends in a radial extension 6 which is preferably substantially right-angled and extends preferably a few millimeters radially outwards, as is best seen in Figures 7, 8 and Figure 9. Thus, each side of the pulley 1, the supports 5 and their radial extensions 6 form a plurality of short channels opening radially outwards and holding the cushioning ring 4. That is, each cushioning ring 4 is supported axially between one side face of the pulley 1 and the radial extensions 6, and further rests on the supports 5.

Each cushioning ring 4 is passed with a certain tension around the supports 5, such that each cushioning ring 4 is supported in a tensioned manner on the supports 5. Between every two adjacent supports 5, the cushioning ring 4 extends free-floating in a straight line, so that the whole cushioning ring 4 adopts (in an unloaded state) a polygonal configuration, as is best seen for instance in Figure 3.

With reference again to Figures 4 and 9, two adjacent supports 5 may be connected contiguously or continuously by a concavely curved transition piece 7 formed laterally to the pulley 1, wherein the supports 5 and the concavely curved transition pieces 7 at one side of the pulley 1 form an undulating track extending radially beneath the corresponding cushioning ring 4. Preferably the undulating track (along with the structure supporting it) is identical at both sides of the pulley 1.

The concavely curved transition pieces 7 of each track form fixed end stops which limit any movements of the free-floating portions of the cushioning ring 4 in the direction of the axis of the pulley 1 to an amount by which the free-floating portions of the cushioning ring 4 shall yield in the direction of the axis when a chain 3 with its rollers and link plates is running onto and over the pulley 1.

The shape of the track formed by the supports 5 and by the concavely curved transition pieces 7 therebetween may be complementary to the lateral profile of common bicycle chain link plates which are wider in their connection areas than in the middle, as shown in the figures.

The cushioning rings 24 may have well known cross sections, for example square or circular.

However, in the embodiment as shown herein, as seen best in Figures 7 and 8, each cushioning ring 4 has a cross section which is called herein generally x-shaped. More specifically, the cross-sectional profile of each cushioning ring 4 has the shape of an alphabetic character x whose legs are short with respect to the body of the character and have concave sections between the legs. The legs as such have preferably convex rounded ends which will be discussed later.

Preferably each cushioning ring 4 projects radially from the radial extensions 6 by at least approximately 2/5 of a total radial height of the cushioning ring 4 or by at least 1/4 of a total radial height of the cushioning ring. Advantageously, the compressibility and height of the cushioning ring 4 has to be chosen so that in operation the link plates of the roller chain 3 may contact the cushioning ring 4 but not the radial extensions 6.

As seen best in Figures 7 and 8, the rounded ends of the legs of each cushioning ring 4 are four circumferentially distributed and convexly curved protrusions 8 on the respective cushioning ring 4 which are connected contiguously by four circumferentially distributed and concavely curved recesses 9 in the respective cushioning ring 4.

Each cushioning ring 4 is mounted to the pulley 1 in a manner and orientation in which two curved protrusions 8 and one concavely curved recess 9 partially face the outer and inner link plates, respectively, of a roller chain 3 running over the pulley 1. The inner protrusion 8 is able to contact and dampen the inner link plates, and the outer protrusion 8 is able to contact and dampen the outer link plates.

While the x-shape of the cushioning rings 4 is advantageous in that one does not have to pay attention to the orientation in which one places them on the cushioning rings 4, it has to be noted that only the two upper curved protrusions 8 and the one upper concavely curved recess 9 are essential for the function of the cushioning ring 4 according to the broadest aspect of the present invention.

In other words, in a simple implementation each cushioning ring 4 comprises, at its side facing the roller chain 3, only one groove extending along its entire perimeter length, which groove, as seen in a cross-sectional view through the cushioning ring 4, is the recess 9 flanked by the two protrusions 8, wherein the protrusions 8 are adapted and orientated to come in contact with outer and inner link plates, respectively, of the roller chain 3 running over the pulley 1. Preferably, a similar additional groove can be provided at the opposite side of the cushioning ring 4 facing the supports 5. Further preferably, similar additional grooves can be provided at the lateral faces of the cushioning ring 4 facing the radial extension 6 and the pulley 1, respectively.

The number of similar additional grooves may vary between 1 and 3, and any combinations of sides are envisaged as preferred alternatives of the invention. The most preferred alternative of the invention includes 4 grooves resulting to the above-described x-shape which is advantageous in terms of its insertion, as discussed, and elasticity. In addition, the x-shape is advantageous in terms of manufacturing.

The function of the groove at the side facing the roller chain 3 is to dampen the forces produced by chain members running from the slack span of the roller chain 3 onto the pulley 1 in a smooth and well-defined manner and with fewer losses than cushioning rings having an annular or a rectangular cross section.

Cushioning rings 4 having at least one groove extending along its entire perimeter length may have also other basic cross sections than shown herein, for example square with three even sides, if each cushioning ring 4 comprises, at least on its side facing the roller chain, the groove extending along its entire perimeter length, which groove, as seen in a cross-sectional view through the cushioning ring, forms the recess 9 flanked by the two protrusions 8, wherein the protrusions 8 are adapted and orientated to come in contact with outer and inner link plates, respectively, of a roller chain 3 running over the pulley 1.

In the embodiment of Figures 1 to 9, the pulley 1 is of a type having a free space 10 in its center, as described in EP 20177531.9. In this case the pulley 1 will be mounted by mounting means (not shown) via an interposed roller bearing 11 to a single-plated cage of the rear derailleur. However, any conventional guide or tension pulley for a rear derailleur of a bicycle, wherein for instance the pulleys are rotatably mounted between two lateral plates of the cage on central bearings which are fitted on central bolts which connect two lateral plates of the cage to each other are envisaged as to be included in the scope of the present invention, as defined by the appended claims.

The disclosure of the present invention includes all modifications and equivalents of the subject matter recited in the claims appended hereto as permitted by applicable law. Moreover, any combination of the above-described elements in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize that the disclosure may be embodied in other specific forms without departing from the disclosure or essential characteristics thereof. The foregoing embodiments are therefore to be considered illustrative rather than limiting to the disclosure described herein in all respects. The scope of the invention is thus indicated by the appended claims, rather than the foregoing description, and all changes that come within the meaning and range of equivalence of the claims are therefore intended to be embraced therein.

### List of references

- 1: pulley
- 2: tooth
- 3: roller chain
- 4: cushioning ring
- 5: support
- 6: radial extension
- 7: transition piece
- 8: protrusion
- 9: recess
- 10: free space
- 11: roller bearing
- 100: rear derailleur
- 101: tension pulley
- 102: guide pulley
- 103: cage
- 104: cassette

## Claims

1. A toothed pulley (1) for a bicycle rear derailleur (100), the pulley (1) carrying on each of its side faces a cushioning ring (4) made of an elastically deformable material and adapted to come in contact with link plates of a roller chain (3) running over the pulley (1), wherein
the pulley (1) includes a number of spaced supports (5) formed laterally to the pulley (1) and projecting in the axial direction of the pulley (1) for supporting each cushioning ring (4), wherein the number of spaced supports (5) is equal to the number of teeth (2) of the pulley (1), wherein each support (5) is angularly aligned with one tooth of the pulley (1), and wherein the cushioning ring (4) extends, in an unloaded state, free-floating in a straight line between every two adjacent supports (5).

2. The pulley (1) according to claim 1, wherein the pulley (1) includes radial extensions (6) formed at each support (5), each cushioning ring (4) being supported axially between one side face of the pulley (1) and the radial extensions (6) formed at each support (5).

3. The pulley (1) according to claim 1 or 2, wherein each cushioning ring (4) projects radially from the radial extensions (6), preferably by at least 1/4 of the total radial height of the cushioning ring (4) and more preferably by at least 2/5 of the total radial height of the cushioning ring (4).

4. The pulley (1) according to one or more of the preceding claims, wherein every two adjacent supports (5) are connected contiguously by a concavely curved transition piece (7) formed laterally to the pulley (1), wherein the supports (5) and the concavely curved transition pieces (7) on each side face of the pulley (1) form together an undulating track extending radially beneath the corresponding cushioning ring (4).

5. The pulley (1) according to claim 4, wherein the supports (5), the radial extensions (6) and/or the concavely curved transition pieces (7) are made in one piece with the pulley (1).

6. The pulley (1) according to one or more of the preceding claims, wherein the pulley (1) is a tension pulley (101) for a bicycle rear derailleur (100) or wherein the pulley is a guide pulley (102) for a bicycle rear derailleur (100).

7. The pulley (1) according to one or more of the preceding claims, wherein each cushioning ring (4) comprises, at least on its side facing of a roller chain (3) running over the pulley (1), a groove extending along its entire perimeter length, which groove, as seen in a cross-sectional view through the cushioning ring (4), is a recess (9) flanked by two protrusions (8), wherein the protrusions (8) are adapted and orientated to come in contact with outer and inner link plates, respectively, of the roller chain (3).

8. The pulley (1) according to claim 7, wherein in a cross-sectional view through the cushioning ring (4) the protrusions (8) are curved convexly and are connected contiguously by the recess (9) which is curved concavely.

9. The pulley (1) according to claim 7 or 8, wherein the cross section of each cushioning ring (4) is generally x-shaped.

10. The pulley (1) according to claims 8 or 9, wherein the cross-sectional profile of each cushioning ring (4) has the shape of an alphabetic character x whose legs are short with respect to the body of the character and have concave sections between the legs, wherein preferably the ends of the legs are concavely rounded.

11. The pulley (1) according to claim 10, wherein in a cross-sectional view through the cushioning ring (4) the concavely rounded ends of the legs are four circumferentially distributed and convexly curved protrusions (8) of the respective cushioning ring (4) which are connected contiguously by four circumferentially distributed and concavely curved recess (9), wherein each cushioning ring (4) is mounted to the pulley (1) in a manner and orientation in which the two convexly curved protrusions (8) of claim 7 or two of the four convexly curved protrusions (8) of claim 10 partially face the outer and inner link plates, respectively, of a roller chain (3) running over the pulley (1) and are able to come in contact therewith.

12. A bicycle rear derailleur (100) comprising a cage (103) supporting a tension pulley (101) and a guide pulley (102) both being rotatably mounted on the cage (103), the cage (103) being movable with respect to the bicycle and adapted to guide a roller chain (3, 23, 43) in an S-shape, wherein the guide pulley (102) and/or the tension pulley (101) are devised according to one or more of claims 1 to 11.

13. The bicycle rear derailleur (100) according to claim 12, wherein either:
at least one of the pulleys (1, 101, 102) is rotatably mounted to the cage (103) by mounting means and an interposed radial bearing (11), wherein the mounting means are arranged so as to be spaced from the center of rotation of the pulley (1) and are positioned along a circular mounting opening provided in the cage (103) spaced away from the center of rotation of the pulley (1), so as to leave a free space (10) in the center of the pulley (1) in its mounted state.
